# EUROPEAN PATENT APPLICATION

(11) **EP 4 691 585 A1**
(43) Date of publication of application: **11.02.2026**
(21) Application number: 25194328.8
(22) Date of filing: 06.08.2025
(51) Int. Cl.: A63F 13/655, A63F 13/213, A63F 13/73, A63F 13/75, A63F 13/86

(54) **GAME DEVICE, METHOD, AND PROGRAM**

(30) Priority: 07.08.2024 JP 2024131116
(71) Applicant: Nintendo Co., Ltd., Kyoto 601-8501 (JP)
(72) Inventor: OIWA, Ryota, Kyoto, 601-8501 (JP); KOBAYASHI, Masayoshi, Kyoto, 601-8501 (JP); OOMORI, Toshiaki, Kyoto, 601-8501 (JP); FUJITA, Akifumi, Kyoto, 601-8501 (JP); HATTA, Naoki, Kyoto, 601-8501 (JP); KAKINUMA, Kentaro, Kyoto, 601-8501 (JP)
(74) Representative: Bardehle Pagenberg Partnerschaft mbB Patentanwälte Rechtsanwälte

(57) **Abstract**

A game device includes execution means configured to simultaneously execute a communication application and a game application and communication control means configured to control data communication with another game device. The communication control means is configured to perform data communication with another game device corresponding to another account belonging to a common group in the communication application in accordance with execution of the communication application by the execution means and to obtain first information from another game device corresponding to another account belonging to the common group through the data communication. The execution means is configured to cause the running game application to obtain second information based on the first information in response to a request issued by the running game application to the running communication application through an application programming interface (API).

## Description

The present disclosure relates to a game device, a method, and a program.

### INTRODUCTION

On-line communication, in which communication using images or sound is enabled over a network, has been known (for example, Japanese Patent Laying-Open No. 2005-157586).

### SUMMARY

There is room for improvement in zest of a game through on-line communication.

(Configuration 1) A game device according to one embodiment includes execution means configured to simultaneously execute a communication application and a game application and communication control means configured to control data communication with another game device. The communication control means is configured to perform data communication with another game device corresponding to another account belonging to a common group in the communication application in accordance with execution of the communication application by the execution means and to obtain first information from the another game device corresponding to the another account belonging to the common group through the data communication. The execution means is configured to cause the running game application to obtain second information based on the first information in response to a request issued by the running game application to the running communication application through an application programming interface (API).

According to Configuration 1, the running game application can use the second information to improve zest of a game.

(Configuration 2) In Configuration 1, in the common group, camera image data captured by a camera may be transmitted and received. The first information may include camera image data transmitted from the another game device. According to Configuration 2, the running game application can use the second information based on the camera image data of a user of another account belonging to the common group.

(Configuration 3) In Configuration 2, the second information may include the transmitted camera image data. According to Configuration 3, the running game application can use the camera image data of the user of another account belonging to the common group.

(Configuration 4) In Configuration 3, the running game application may not use the camera image data in the second information when use of the transmitted camera image data in the communication application is restricted. According to Configuration 4, when use of the camera image data in the running communication application is restricted, the restriction can be inherited to the running game application.

(Configuration 5) In any of Configurations 1 to 4, the second information may include information on a game application in the another game device. According to Configuration 5, the running game application can perform, for example, processing using information on a game application in another game device.

(Configuration 6) In Configuration 5, the information on the game application may include information for identifying a game application running in the another game device. According to Configuration 6, the running game application can perform, for example, processing using information for identifying a game application running in another game device.

(Configuration 7) In any of Configurations 1 to 6, in the common group, audio data obtained by a microphone may be transmitted and received. The first information may include audio data transmitted from another game device. According to Configuration 7, the running game application can use audio data of the user of another account belonging to the common group.

(Configuration 8) In any of Configurations 1 to 7, the request may include causing the running communication application to be in a state that permits the running game application to obtain the second information when a predetermined condition is satisfied. According to Configuration 8, the running communication application determines whether or not the predetermined condition is satisfied, and when the predetermined condition is satisfied, the running game application can obtain the second information. Therefore, the running game application does not have to determine whether or not the predetermined condition is satisfied and can obtain the second information when the predetermined condition is satisfied.

(Configuration 9) In Configuration 8, the predetermined condition may be a condition satisfied when the number of accounts belonging to the common group changes. According to Configuration 9, the running application can detect change in the number of accounts belonging to the group. For example, when the number of accounts changes, the running game application can perform processing in accordance with the change.

(Configuration 10) In any of Configurations 1 to 9, the execution means may permit the running game application to obtain third information based on the first information in response to another request different from the request through the API when the second information satisfies a predetermined condition. According to Configuration 10, the running communication application can issue a request for third information by being triggered by the fact that the obtained second information satisfies a predetermined condition. Thus, the third information can be obtained at an appropriate timing such as timing of update of predetermined information in the first information on which the third information is based.

(Configuration 11) In Configuration 10, the predetermined condition may be a condition satisfied when the number of accounts belonging to the common group changes. According to Configuration 11, when the number of accounts changes, the running game application can perform, for example, processing in accordance with the change.

(Configuration 12) In any of Configurations 1 to 11, the running game application may execute a networked game based on the second information. According to Configuration 12, a networked game can be executed while taking into account an account belonging to the common group with the use of the second information based on the first information shared in the group to which the account belongs.

(Configuration 13) In Configuration 12, the second information may include identification information of another account belonging to the common group. The running game application may execute the networked game based on the identification information, with another game device corresponding to an account that satisfies a predetermined condition. According to Configuration 13, the running game application can execute, for example, a networked game with a game terminal in the common group in which the common game application is running.

(Configuration 14) In any of Configurations 1 to 13, the second information may include identification information of another account belonging to the common group. The running game application may generate an interface screen for allowing another account belonging to the common group to join a common game group, based on the second information. According to Configuration 14, the user can more readily determine an account to join the common game group.

(Configuration 15) In Configuration 12, the second information may include camera image data transmitted from another game device. According to Configuration 15, the running game application can output, for example, a game image or the like using camera image data.

(Configuration 16) In Configuration 15, the running game application may obtain the transmitted camera image data corresponding to another account that belongs to the common group and belongs also to a game group. The running communication application may transmit a game image to another game device corresponding to an account belonging to the common group, the game image being generated by the running game application using the transmitted camera image data. According to Configuration 16, communication can be promoted by distribution of the game image using the camera image of the user of the account belonging to the common group to a user of an account belonging to the common group.

(Configuration 17) In any of Configurations 1 to 15, the running communication application may transmit image data outputted by the running game application to another game device corresponding to another account belonging to the common group. According to Configuration 17, communication can be promoted by distribution of an image of the game application that has obtained group information on the group to which the account belongs to a user of another account belonging to the common group.

(Configuration 18) According to another embodiment, a method to be performed in a game device is provided. The method includes simultaneously executing a communication application and a game application, performing data communication with another game device corresponding to another account belonging to a common group in the communication application in accordance with execution of the communication application, obtaining first information from the another game device corresponding to the another account belonging to the common group through the data communication, and causing the running game application to obtain second information based on the first information in response to a request issued by the running game application to the running communication application through an API.

(Configuration 19) A program according to yet another embodiment causes one or more processors to perform simultaneously executing a communication application and a game application, controlling data communication with another game device corresponding to another account belonging to a common group in the communication application in accordance with execution of the communication application, obtaining first information from the another game device corresponding to the another account belonging to the common group through the data communication, and causing the running game application to obtain second information based on the first information in response to a request issued by the running game application to the running communication application through an API.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of a system according to the present embodiment.
Fig. 2 shows an exemplary illustrative non-limiting drawing illustrating an exemplary hardware configuration of a game device according to the present embodiment.
Fig. 3 shows an exemplary illustrative non-limiting drawing illustrating an exemplary hardware configuration of a management server according to the present embodiment.
Fig. 4 shows an exemplary illustrative non-limiting drawing illustrating an exemplary software configuration of the game device according to the present embodiment.
Figs. 5A to 5C show exemplary illustrative non-limiting drawings illustrating exemplary flowcharts showing exemplary processing for managing group information performed by a communication execution unit according to the present embodiment.
Fig. 6 shows an exemplary illustrative non-limiting drawing illustrating exemplary group information of the game device according to the present embodiment.
Fig. 7 shows an exemplary illustrative non-limiting drawing illustrating an exemplary flowchart showing exemplary processing in communication data transmission processing performed by the communication execution unit according to the present embodiment.
Fig. 8 shows an exemplary illustrative non-limiting drawing illustrating an exemplary flowchart showing exemplary processing in communication data reception processing performed by the communication execution unit according to the present embodiment.
Fig. 9 shows an exemplary illustrative non-limiting drawing illustrating an exemplary flowchart showing exemplary interface processing by the communication execution unit according to the present embodiment.
Fig. 10 shows an exemplary illustrative non-limiting drawing illustrating an exemplary flowchart showing other exemplary interface processing by the communication execution unit according to the present embodiment.
Fig. 11 shows an exemplary illustrative non-limiting drawing illustrating an exemplary sequence chart showing exemplary processing by a game application according to the present embodiment.
Figs. 12A and 12B show exemplary illustrative non-limiting drawings illustrating exemplary game image data outputted by a game execution unit according to the present embodiment.
Fig. 13 shows an exemplary illustrative non-limiting drawing illustrating an exemplary screen generated by the game execution unit according to the present embodiment.
Fig. 14 shows an exemplary illustrative non-limiting drawing illustrating another exemplary screen generated by the game execution unit according to the present embodiment.
Fig. 15 shows an exemplary illustrative non-limiting drawing illustrating an exemplary flowchart showing exemplary processing by the game execution unit according to the present embodiment.

### DETAILED DESCRIPTION

The present embodiment will be described in detail with reference to the drawings. The same or corresponding elements in the drawings have the same reference characters allotted and description thereof will not be repeated.

### [A. Exemplary System Configuration]

An exemplary configuration of a system according to the present embodiment will initially be described.

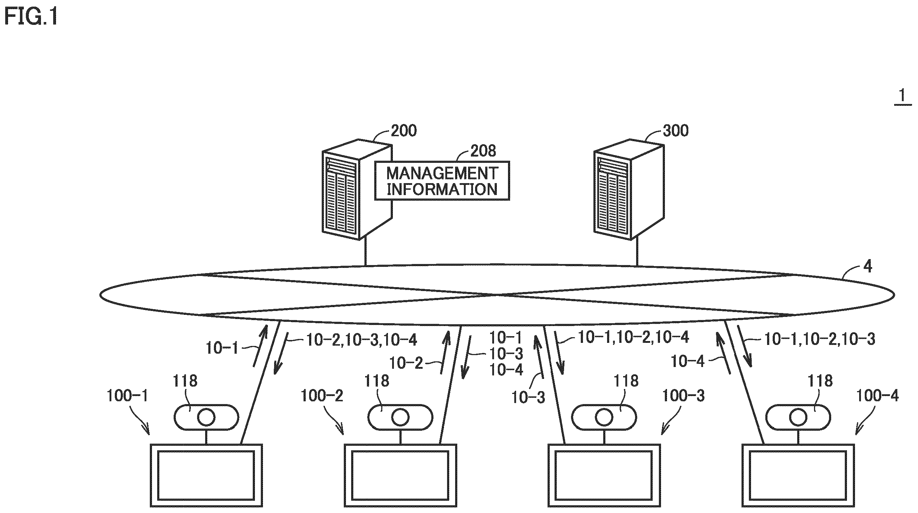

Referring to Fig. 1, a system 1 includes one or more game devices 100. Game device 100 is, for example, an information processing apparatus exclusive for gaming. Fig. 1 shows an exemplary configuration of system 1 including four game devices 100 connected to a network 4. When each of the plurality of game devices 100 should be specified in the description below, a sub number will be given for distinction (for example, game devices 100-1, 100-2, 100-3, and 100-4 shown in Fig. 1).

In the present embodiment, a user who uses game device 100 has his/her own account, and a user's own account is brought in correspondence with each game device 100. A single account may be brought in correspondence with a plurality of game devices 100 or a plurality of accounts may be brought in correspondence with a single game device 100. The user who has the account can allow the account with which the game device is brought in correspondence to join one or more communication groups (which will also be abbreviated as a "group" below) by providing predetermined input to game device 100. In the present embodiment, a state in which an account has joined the group represents a state in which communication with a user of another account that has joined the group is enabled. "Belonging" herein encompasses a state in which an account at least participates in a group. The state in which the account belongs to the group may include a state in which the account has joined the group and a state in which the account is in an approval pending state before the account joins the group. The state in which the account belongs to the group may include, in addition to one or both of the above, a state after the account left the group which the account had once joined.

In the present embodiment, the group is formed by a plurality of accounts, and in the group, communication can be performed. A certain account may be permitted to simultaneously belong to only one group, or may be permitted to simultaneously belong to a plurality of groups. Processing in an example where an account belongs to one group will be described below by way of example. An upper limit may be set for the number of accounts that can belong to each group.

In exemplary processing for a certain account to join a group, the account may be permitted to join the group only when the account receives some kind of invitation and thereafter the user of the account approves the invitation. Alternatively, a certain account may be permitted to join a certain group only when the account applies to join the group and thereafter another account approves the application.

Game device 100 corresponding to an account belonging to at least one group transmits data (which will also be referred to as "communication data 10" below) to be used for communication between users to another game device 100 corresponding to another account belonging to the group. Thus, game devices 100 used by users belonging to at least one group can exchange various types of information with each other.

For example, communication data 10 may include audio data obtained by game device 100, image data obtained by game device 100, text data obtained by game device 100, information on a game to be played in game device 100, or the like.

Image data herein encompasses data of moving images and data of one or more still images. The image data may be captured by a camera 118 or the like available at game device 100 or may be an image of an application running in game device 100.

For transmission and reception of communication data 10, among a plurality of game devices 100 corresponding to accounts belonging to a group, a session corresponding to the group may be established. In other words, the plurality of game devices 100 corresponding to the accounts belonging to the common group may have a common session. A management server 200 may manage the session.

Fig. 1 shows an example where game devices 100-1 to 100-4 correspond to four respective accounts belonging to the common group by way of example. Game device 100-1 transmits communication data 10-1 to one or more other game devices 100 and receives communication data 10-2 to 10-4 transmitted by one or more other game devices 100. Game devices 100-2 to 100-4 transmit and receive communication data 10 similarly to game device 100-1. Processing based on communication data 10 will be described in detail later.

System 1 further includes management server 200. Management server 200 is responsible for processing for newly forming a group, processing for one or more accounts to join a group, or the like. Management server 200 holds management information 208 for managing a formed group, one or more accounts belonging to each group, or the like.

System 1 may further include a relay server 300. Relay server 300 relays communication data 10 transmitted and received by one or more game devices 100.

Management server 200 and relay server 300 may be implemented as a single physical server. System 1 may include a plurality of management servers 200 or may include a plurality of relay servers 300. Management server 200 and relay server 300 do not have to be separate in their function. Management server 200 and relay server 300 may be virtual servers.

A scheme to transmit communication data 10 from certain game device 100 to one or more other game devices 100 may be a scheme to directly transmit communication data 10 to one or more other game devices 100 (for example, P2P or the like), in addition to or instead of a scheme via one or more relay entities (for example, relay servers 300).

The same game application may be executed between a plurality of game devices 100. In this case, the game application may be a networked game in which game devices 100 exchange data therebetween. An account may be essential for playing a networked game.

An account (which will also be referred to as a "game account" below for distinction) used to join a networked game may be the same as or different from an account to join a group. Furthermore, the account used to join the group and the game account may conform to frameworks different from each other.

In an example where a plurality of users play the same game application (a networked game or the like), an assembly of game accounts of the users will also be referred to as a "game group" for distinction from a communication group. At least one of accounts belonging to a game group may be an account belonging to the common group, and another account belonging to the game group may not belong to the common group.

### [B. Exemplary Hardware Configuration]

An exemplary hardware configuration of each apparatus included in system 1 according to the present embodiment will now be described.

### (b1: Game Device 100)

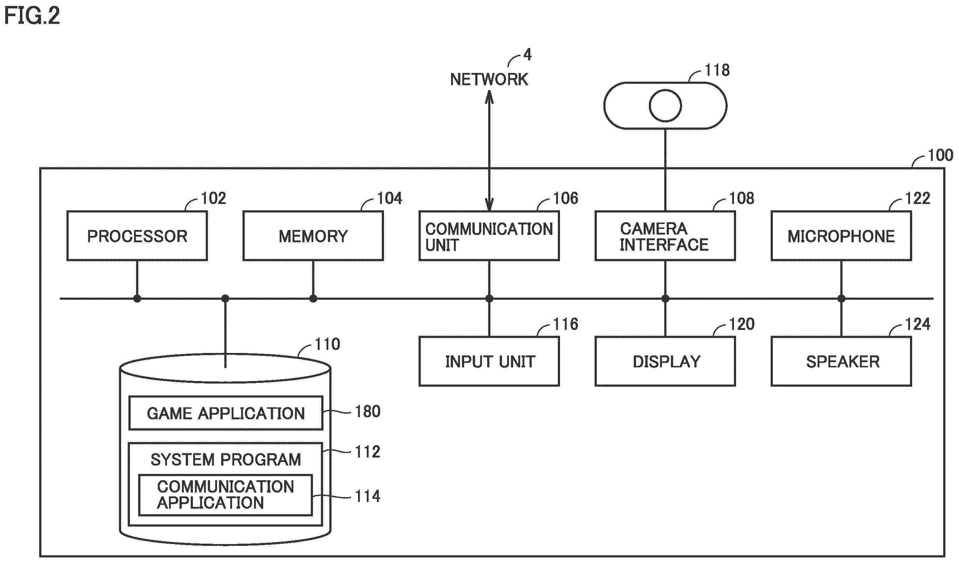

An exemplary hardware configuration of game device 100 according to the present embodiment will be described with reference to Fig. 2. Game device 100 is a kind of computer. Referring to Fig. 2, game device 100 includes, for example, one or more processors 102, one or more memories 104, a communication unit 106, a camera interface 108, a storage 110, an input unit 116, a display 120, a microphone 122, and a speaker 124. Each component may be removable from a main body of game device 100.

Processor 102 is a processing entity for performing processing in game device 100. Processor 102 includes, for example, a central processing unit (CPU), a graphics processing unit (GPU), or the like. Processor 102 develops a program stored in storage 110 on memory 104 and executes the same.

Memory 104 is a volatile storage medium accessible by processor 102, and it includes, for example, a dynamic random access memory (DRAM), a static random access memory (SRAM), or the like.

Storage 110 is a non-volatile storage medium accessible by processor 102, and it includes, for example, a flash memory, a hard disk, or the like. Storage 110 may include, for example, a storage medium attachable to and removable from game device 100, such as a cartridge or an optical disc.

For example, a system program 112 and a game application 180 are stored in storage 110.

System program 112 includes a computer readable instruction for hardware control of game device 100, provision of a program execution environment, or the like. System program 112 includes a communication application 114. Though details will be described later, communication application 114 performs processing relating to transmission and reception of communication data 10 between a plurality of game devices 100 corresponding to a plurality of accounts belonging to a group.

Game application 180 includes a computer readable instruction for execution of a game. A plurality of game applications 180 may be installed in game device 100. Game application 180 may be read from a separate storage medium.

The term "processor" herein encompasses at least processing circuitry that performs processing in accordance with a computer readable instruction, such as a CPU or a GPU, and hard-wired circuitry such as an application specific integrated circuit (ASIC) or a field programmable gate array (FPGA).

The term "memory" herein encompasses at least memory 104 and storage 110.

In game device 100, a system on chip (SoC) in which functions of the processor, the memory, and the like are integrated may be adopted. In this case, the processor and the memory are located at the same SoC (integrated circuit). Therefore, the terms "processor" and "memory" herein encompass configurations independent of each other and an integrated configuration.

Communication unit 106 transmits and receives data to and from another game device 100, management server 200, relay server 300, or the like over network 4. Communication unit 106 may communicate data with another game device 100 over the Internet as exemplary network 4. Network 4 may be a wireless network in conformity with Bluetooth^{®}, ZigBee^{®}, wireless LAN (IEEE 802.11), or the like.

Camera interface 108 mediates data transmission to camera 118 and data reception from camera 118. Connection of camera interface 108 to camera 118 may be wired connection or wireless connection.

Input unit 116 accepts a user operation. Input unit 116 includes, for example, a keyboard, a mouse, a game controller, a touch panel, and/or the like. Input unit 116 may be an interface with an apparatus (for example, a game controller) configured to accept a user operation. In other words, the apparatus configured to accept a user operation may be located outside game device 100.

Display 120 shows an image or a video image generated as a result of processing by processor 102. Display 120 includes, for example, a liquid crystal display (LCD), an organic EL display, or the like. Display 120 may be located outside game device 100. In this case, game device 100 may include an interface circuit with display 120.

Microphone 122 is arranged at a housing or the like of game device 100 and collects sound to generate an audio signal. Speaker 124 is arranged at the housing or the like of game device 100 and generates sound from an audio signal. At least one of microphone 122 and speaker 124 may be located outside game device 100.

Camera 118 generates camera data (moving image data or still image data) resulting from image capture of a subject, in accordance with a command from game device 100 or a predetermined condition.

Camera 118 includes an image capture element such as a charge-coupled device (CCD) image sensor or a complementary metal oxide semiconductor (CMOS) image sensor. A lens may be arranged in a stage preceding the image capture element.

Camera 118 may be, for example, a camera for video chat. Camera 118 may be a dedicated camera connectable only to a specific device or a general-purpose camera connectable to any device. A plurality of cameras 118 may be connectable to game device 100.

Game devices 100 corresponding to respective accounts belonging to the common group do not have to be identical in hardware configuration. For example, at least one game device 100 may be a dedicated game machine and another game device 100 may be a personal computer, a television, a smartphone, a tablet, or the like where a game can be executed. Game device 100 should only be an information processing apparatus capable of executing at least a game.

### (b2: Management Server 200)

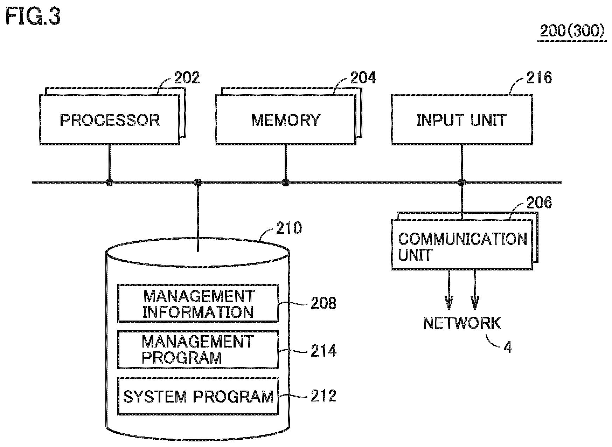

An exemplary hardware configuration of management server 200 according to the present embodiment will be described with reference to Fig. 3. Management server 200 includes, for example, one or more processors 202, one or more memories 204, one or more communication units 206, a storage 210, and an input unit 216.

Processor 202 is a processing entity for performing processing in management server 200. Processor 202 includes, for example, a CPU, a GPU, or the like. Processor 202 develops a program stored in storage 210 on memory 204 and executes the same.

Memory 204 is a volatile storage medium accessible by processor 202, and it includes, for example, a DRAM, a SRAM, or the like.

Storage 210 is a non-volatile storage medium accessible by processor 202, and it includes, for example, a hard disk, a flash memory, or the like. For example, a system program 212, a management program 214, and the like are stored in storage 210.

System program 212 includes a computer readable instruction for hardware control of management server 200, provision of a program execution environment, or the like.

Management program 214 includes a computer readable instruction for performing processing involved with management for which management server 200 is responsible.

Management information 208 may be stored in storage 210 or memory 204.

Communication unit 206 transmits and receives data to and from game device 100, management server 200, or the like over network 4. Connection of communication unit 206 to network 4 may be wired connection or wireless connection.

Input unit 216 accepts a user operation. Input unit 216 includes, for example, a keyboard, a mouse, and/or the like.

### (b3: Relay Server 300)

Since relay server 300 is similar in exemplary hardware configuration to management server 200 shown in Fig. 3, detailed description will not be repeated.

A relay program stored in a storage of relay server 300 may include a computer readable instruction for transmitting and receiving and relaying communication data 10.

### [C. Exemplary Software Configuration of Game Device 100]

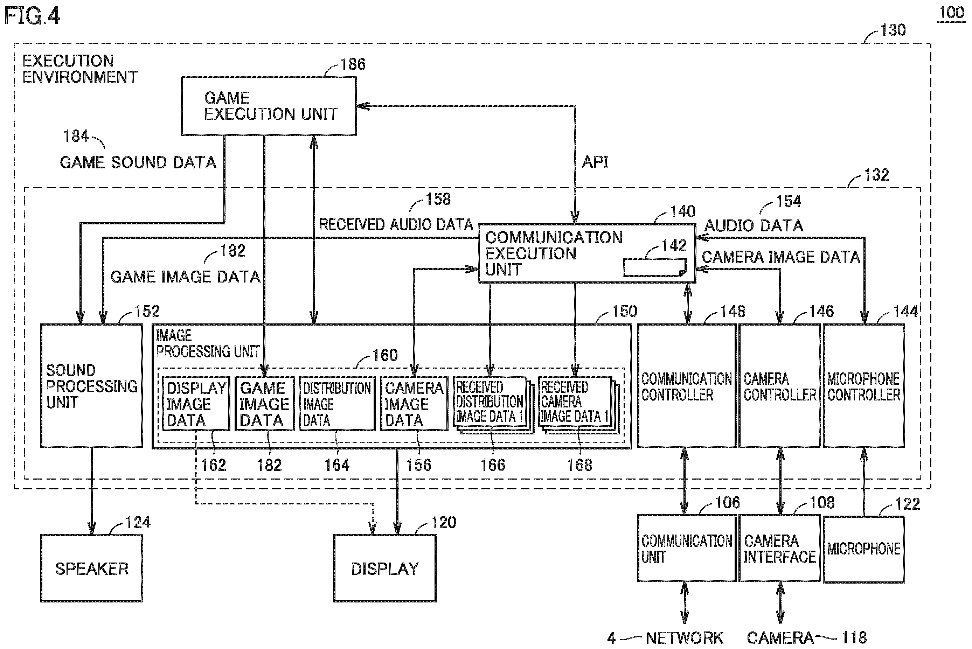

An exemplary software configuration of game device 100 according to the present embodiment will now be described with reference to Fig. 4.

Game device 100 includes a program execution environment 130. Execution environment 130 may be implemented by execution of system program 112 by one or more processors 102.

In execution environment 130, system program 112 including communication application 114 and game application 180 are simultaneously executable. "Simultaneous execution" means execution of a plurality of applications or programs in parallel and does not intend to limit timing of execution or the like.

Running system program 112 corresponds to a system module 132. System module 132 provides a basic function required in game device 100.

A game execution unit 186 corresponds to running game application 180.

System module 132 includes a communication execution unit 140. Communication execution unit 140 corresponds to running communication application 114.

System module 132 includes a microphone controller 144, a camera controller 146, a communication controller 148, an image processing unit 150, and a sound processing unit 152.

Microphone controller 144 generates audio data 154 from an audio signal outputted from microphone 122. Microphone controller 144 may be able to change microphone 122 to a mute state.

Camera controller 146 generates camera image data 156 from a video signal outputted from camera 118. Camera controller 146 may be able to control start and stop or the like of image capture by camera 118, or to control a condition (a frame rate, white balance, or the like) for image capture by camera 118.

Communication controller 148 gives a command to communication unit 106 to control data communication with another game device 100 or the like.

A storage area 160 for storage of image data is available at image processing unit 150. Use of storage 160 may be, for example, use of a partial area of one or more memories 104 or storage 110. Image processing unit 150 may be capable of image processing on one or more pieces of image data.

Storage area 160 may include, for example, an area for storage of display image data 162, game image data 182, distribution image data 164, camera image data 156, one or more pieces of received distribution image data 166, and one or more pieces of received camera image data 168.

Communication execution unit 140 performs processing for exchanging communication data 10 with another game device 100.

For example, communication execution unit 140 may perform processing necessary for joining a designated group in accordance with a user operation. Communication execution unit 140 may store group information 142. Communication execution unit 140 may update group information 142 based on information from management server 200 or the like, periodically or each time a predetermined condition is satisfied. Group information 142 may be stored, for example, in a partial area of one or more memories 104 or storage 110.

Communication execution unit 140 may transmit a state of execution of game application 180 or the like to management server 200 or another game device 100 belonging to the common group by means of communication controller 148. The state of execution of game application 180 may be transmitted at timing when a predetermined condition is satisfied or periodically.

Communication execution unit 140 may transmit audio data 154 generated by microphone controller 144 to another game device 100 by means of communication controller 148. Communication execution unit 140 may output to sound processing unit 152 by means of communication controller 148, one or more pieces of audio data (received audio data 158) transmitted by another game device 100.

Communication execution unit 140 may transmit camera image data 156 generated by camera controller 146 to another game device 100 by means of communication controller 148. Communication execution unit 140 may have camera image data 156 stored in storage area 160 of image processing unit 150. Communication execution unit 140 may have one or more pieces of camera image data (received camera image data 168) stored in storage area 160 of image processing unit 150, the one or more pieces of camera image data being transmitted by another game device 100 by means of communication controller 148. Received camera image data 168 may include camera image data 156 transmitted by the subject game device.

Communication execution unit 140 may transmit distribution image data 164 generated with any method to another game device 100 by means of communication controller 148. Communication execution unit 140 may have one or more pieces of distribution image data (received distribution image data 166) stored in storage area 160 of image processing unit 150, the one or more pieces of distribution image data being transmitted by another game device 100 by means of communication controller 148. Received distribution image data 166 may include distribution image data 164 transmitted by the subject game device.

Communication controller 148 thus performs data communication with another game device 100 corresponding to another account belonging to the common group regarding communication execution unit 140 or with management server 200, in accordance with communication execution unit 140, and obtains through data communication, information (for example, communication data 10) from another game device 100 corresponding to another account belonging to the common group.

Distribution image data 164 may be generated based on one or more pieces of image data available at game device 100. For example, while game application 180 is running in game device 100, distribution image data 164 may be generated based on game image data 182 outputted by running game application 180 (game execution unit 186). While a menu screen is shown at game device 100, distribution image data 164 may be generated based on the menu screen. In an example otherwise, for example, an image that does not substantially include information on video images, such as a black image or a white image (which will also be referred to as a "mute image" below), may be adopted as distribution image data 164. Received distribution image data 166 is also similar to distribution image data 164.

Image processing unit 150 generates a video signal based on image data and outputs the generated video signal to display 120. For example, display image data 162 is used for generation of the video signal. Image processing unit 150 may generate display image data 162 to be used for generation of the video signal by using one or more pieces of image data stored in storage area 160. Display image data 162 may be generated, for example, by superimposing camera image data 156 or received camera image data 168 on game image data 182. By generating such display image data 162, an image (game image data 182) outputted by game execution unit 186 can be shown, together with a face or the like of the user who plays game application 180.

Sound processing unit 152 generates an audio signal based on audio data and outputs the generated audio signal to speaker 124. For example, sound processing unit 152 may generate the audio signal by synthesizing game sound data 184 outputted by game execution unit 186 and one or more pieces of received audio data 158.

In the exemplary software configuration shown in Fig. 4, at least a part of communication application 114 may be an application outside system module 132, similarly to game application 180. At least a part of game application 180 may be included in system module 132.

At least a part of execution of a game by game application 180 may use execution environment 130 of another game device 100 or an external resource such as a server.

### [D. Exemplary Processing in Communication Execution Unit 140]

Exemplary processing in communication execution unit 140 will now be described.

### (d1: Management of Group Information)

Communication execution unit 140 manages group information 142 on a group to which an account corresponding to the subject game device belongs. Exemplary processing for managing group information 142 will be described. Details of group information 142 will be described later.

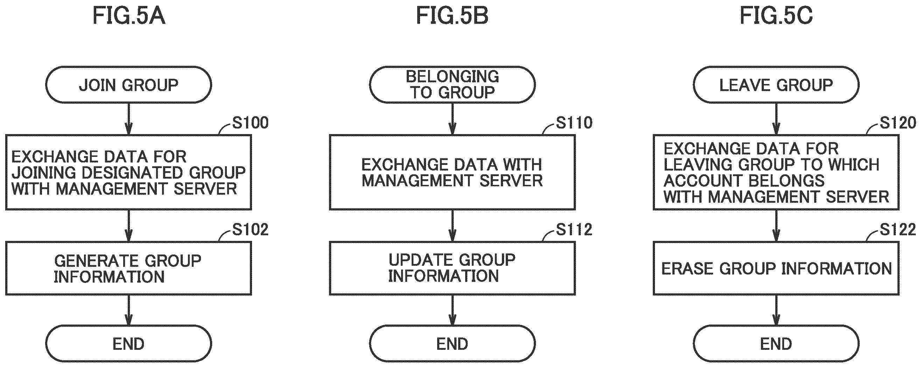

Exemplary processing for managing group information 142 performed by communication execution unit 140 according to the present embodiment will be described with reference to Figs. 5A to 5C. Fig. 5A shows exemplary processing performed for joining a group, Fig. 5B shows exemplary processing performed when an account is belonging to the group, and Fig. 5C shows exemplary processing performed when the account leaves the group.

Referring to Fig. 5A, when communication execution unit 140 receives a request for joining at least one group, it exchanges data for joining the designated group with management server 200 (step S100). When it has successfully joined the designated group, communication execution unit 140 generates group information 142 (step S102). Group information 142 may be generated based on information transmitted by management server 200. The information transmitted by management server 200 may be based on at least a part of management information 208 held by management server 200. Processing for joining the designated group may be based on an account.

Referring to Fig. 5B, while an account belongs to at least one group, communication execution unit 140 exchanges data with management server 200 (step S110). Communication execution unit 140 updates group information 142 based on the data exchanged with management server 200 (step S112).

For example, communication execution unit 140 may transmit information on the subject account (an account corresponding to the subject game device) to management server 200. Data may be exchanged with management server 200, for example, every predetermined cycle.

Referring to Fig. 5C, when communication execution unit 140 receives a request for leaving the group to which an account belongs, it exchanges data for leaving the group to which the account belongs with management server 200 (step S120). After the account leaves the group, communication execution unit 140 erases group information 142 (step S122). A part or the entirety of group information 142 may be maintained also after the account leaves the group.

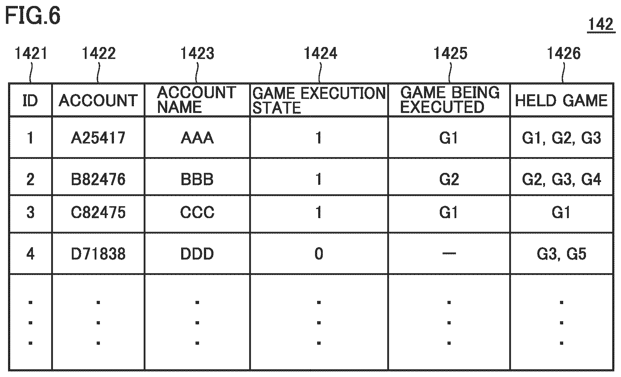

Exemplary group information 142 of game device 100 according to the present embodiment will be described with reference to Fig. 6. Group information 142 includes information on each account belonging to the common group. Group information 142 may include information on game application 180 in another game device 100. Group information 142 may include information on another game device 100.

Group information 142 includes an ID 1421, an account 1422, and an account name 1423 by way of example. ID 1421 indicates identification information for uniquely specifying each account in the group. Account 1422 indicates identification information for specifying each account. Account name 1423 indicates a name provided to each account.

Group information 142 may include a game execution state 1424, executed-game information 1425, and held-game information 1426 by way of example of information on game application 180 in another game device 100.

Game execution state 1424 indicates a state of execution of game application 180 in game device 100 corresponding to each account. For example, "1" may mean running and "0" may mean not running. Game execution state 1424 may be information indicating whether or not some kind of game application 180 is running in each game device 100.

Executed-game information 1425 indicates game application 180 running in game device 100 corresponding to each account. Executed-game information 1425 is information for identifying game application 180 running in another game device 100. There may be a plurality of running game applications 180. In that case, running game application 180 included in executed-game information 1425 may be one, at least one, or all of the plurality of running game applications.

Held-game information 1426 indicates game application 180 available to each account or game device 100 corresponding thereto or game application 180 held by each account or game device 100 corresponding thereto. Alternatively, for example, held-game information 1426 may indicate game application 180 that has been executed by each account or game device 100 corresponding thereto, or combination of these conditions.

Group information 142 may include information indicating whether or not image capture by camera 118 is available in another game device 100. For example, game application 180 can change display in game application 180, based on the information indicating whether or not image capture by camera 118 is available in game device 100.

Group information 142 may or may not include information on the subject account (an account corresponding to the subject game device). Group information 142 does not have to include all information shown in Fig. 6. Though group information 142 is exemplified in a form of a table in Fig. 6 for the sake of convenience of description, information may be stored in any form.

Game device 100 does not have to always store group information 142 but may issue a query to management server 200 or the like each time. In this case, game device 100 may temporarily store or cache at least a part of information obtained from management server 200.

### (d2: Processing for Transmitting Communication Data 10)

Communication execution unit 140 performs processing for transmitting communication data 10.

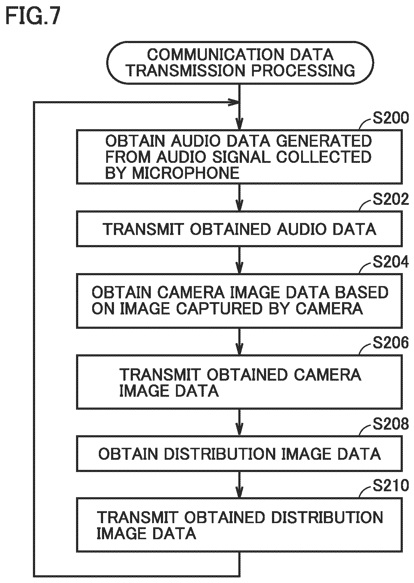

Exemplary processing in communication data transmission processing performed by communication execution unit 140 according to the present embodiment will be described with reference to Fig. 7. The processing shown in Fig. 7 is performed while an account belongs to at least one group.

Communication execution unit 140 obtains audio data 154 generated from an audio signal collected by microphone122 (step S200) and transmits obtained audio data 154 (step S202). Audio data 154 may be audio data subjected to predetermined modification or processing.

Communication execution unit 140 obtains camera image data 156 based on an image captured by camera 118 (step S204) and transmits obtained camera image data 156 (step S206). Camera image data 156 may include the entire image captured by camera 118 or only a part of the image. Camera image data 156 is not limited to the above, and may be camera image data subjected to predetermined modification or processing.

Communication execution unit 140 obtains distribution image data 164 (step S208) and transmits obtained distribution image data 164 (step S210). Distribution image data 164 may be distribution image data subjected to predetermined modification or processing. Game image data 182 may be transmitted as distribution image data 164 to another game device 100 corresponding to another account belonging to the common group.

Cycles of obtaining and transmitting audio data 154, camera image data 156, and distribution image data 164 do not have to be the same among them. The order of these cycles of obtaining and transmitting the data does not matter. At least one of audio data 154, camera image data 156, and distribution image data 164 may be a data stream in conformity, for example, with an H.264 (MPEG-4 AVC) standard.

### (d3: Processing for Receiving Communication Data 10)

Communication execution unit 140 performs processing for receiving communication data 10.

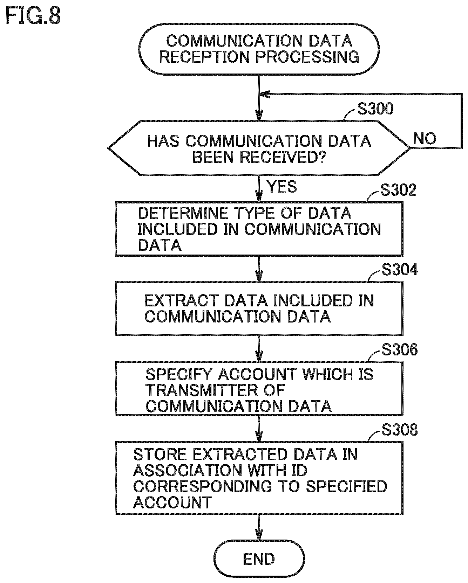

Exemplary processing in communication data reception processing performed by communication execution unit 140 according to the present embodiment will be described with reference to Fig. 8. The processing shown in Fig. 8 is performed while an account belongs to at least one group.

In the present embodiment, when communication execution unit 140 receives communication data 10 (YES in step S300), it determines a type of data included in communication data 10 (step S302). Communication execution unit 140 extracts data included in communication data 10 based on a result of determination of the type of data (step S304).

Communication execution unit 140 specifies an account which is a transmitter of communication data 10 (step S306) and has the extracted data stored in association with an ID corresponding to the specified account (step S308).

When communication data 10 includes distribution image data, the distribution image data included in communication data 10 is extracted as received distribution image data 166. Each piece of received distribution image data 166 may be associated with a distribution image ID which is exemplary identification information for specifying the transmitter account.

When communication data 10 includes camera image data, the camera image data included in communication data 10 is extracted as received camera image data 168. Each piece of received camera image data 168 may be associated with a camera image ID which is exemplary identification information for specifying the transmitter account.

When communication data 10 includes audio data, the audio data included in communication data 10 is extracted as received audio data 158.

The image data and the audio data do not have to be associated with identification information for specifying the transmitter account.

### (d4: Exemplary Interface Processing)

As described above, execution environment 130 simultaneously executes communication application 114 (communication execution unit 140) and game application 180 (game execution unit 186). Therefore, execution environment 130 provides an interface for exchange of information between communication execution unit 140 and game execution unit 186. More specifically, in response to requests from various applications including game application 180, communication execution unit 140 can respond with information based on communication data 10.

Communication execution unit 140 may include an application programming interface (API) for exchange of data with an application. In this case, such an application as game application 180 requests communication execution unit 140 for data in accordance with a command syntax defined in advance as the API.

Execution environment 140 thus has game execution unit 186 obtain information based on the information (for example, communication data 10) exchanged with another game device 100 in response to the request issued by game execution unit 186 to communication execution unit 140 through the API. Information obtained by game execution unit 186 may be information itself obtained from another game device 100 or information subjected to predetermined modification or processing.

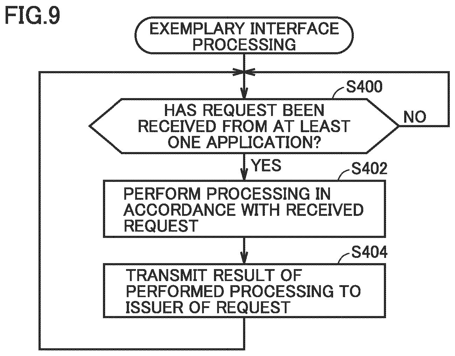

Exemplary interface processing by communication execution unit 140 according to the present embodiment will be described with reference to Fig. 9. Communication execution unit 140 determines whether or not it has received a request from at least one application (step S400). When the communication execution unit has received the request from none of applications (NO in step S400), processing in step S400 is repeated.

When communication execution unit 140 has received the request from at least one application (YES in step S400), it performs processing in accordance with the received

The processing in response to the request may include, for example, processing for responding with at least a part of group information 142, processing for responding with information based on at least a part of group information 142, processing for responding with at least a part of image data stored in storage area 160 of image processing unit 150, processing for responding with information on the image data stored in storage area 160 of image processing unit 150, processing for responding with received audio data 158, processing for responding with information on received audio data 158, or the like.

As described above, group information 142 is updated by communication execution unit 140. Therefore, as will be exemplified below, determination by communication execution unit 140 as to whether or not group information 142 satisfies a predetermined condition may be more efficient.

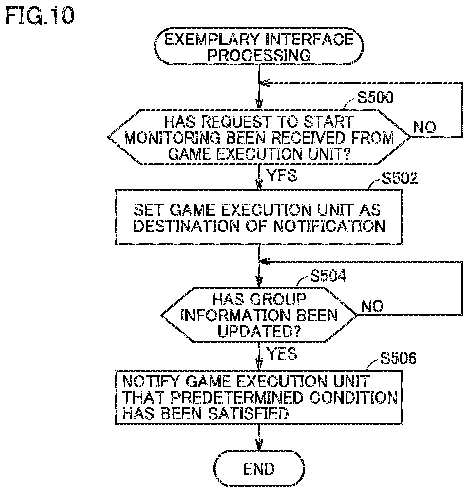

Other exemplary interface processing by communication execution unit 140 according to the present embodiment will be described with reference to Fig. 10. Upon receiving a request to start monitoring, communication execution unit 140 notifies the issuer of the request when a predetermined condition is satisfied. The predetermined condition includes, for example, update of group information 142.

Communication execution unit 140 determines whether or not it has received the request to start monitoring from game execution unit 186 (step S500). When the communication execution unit has not received the request to start monitoring from game execution unit 186 (NO in step S500), processing in step S500 is repeated.

When communication execution unit 140 receives the request to start monitoring from game execution unit 186 (YES in step S500), it sets game execution unit 186 as a destination of a notification (step S502).

Communication execution unit 140 determines whether or not group information 142 has been updated (step S504). When group information 142 has not been updated (NO in step S504), processing in step S504 is repeated.

When group information 142 has been updated (YES in step S504), communication execution unit 140 notifies game execution unit 186 that the predetermined condition has been satisfied (step S506). The process then ends.

Though exemplary processing in which monitoring processing ends when the predetermined condition is once satisfied is shown in the description above, monitoring (steps S504 and S506) may continue until reception of a request to quit monitoring. Monitoring (steps S504 and S506) may continue until the predetermined condition is satisfied a plurality of times.

The predetermined condition is not limited to update of group information 142. For example, the predetermined condition may include change in number of accounts belonging to the common group, start or end of execution of at least one application in game device 100 corresponding to at least one account belonging to the common group, change of some kind of information included in group information 142, or the like. In these cases, communication execution unit 140 may determine whether or not updated contents satisfy the predetermined condition after group information 142 is updated (YES in S504), and may notify game execution unit 186 only when the predetermined condition is satisfied. The predetermined condition may be designated in the received request to start monitoring.

For example, in an example where the predetermined condition is increase in number of accounts belonging to the group, based on a notification that the predetermined condition is satisfied, game application 180 can perform predetermined processing to provide representation based on the predetermined processing, so that the user of game device 100 can be notified that a new user has joined the group. The predetermined processing may be, for example, a request to communication execution unit 140 for data.

Though communication execution unit 140 notifies game execution unit 186 when group information 142 satisfies the predetermined condition in exemplary processing shown in Fig. 10 described above, in other exemplary processing, game execution unit 186 may be kept notified of whether or not the predetermined condition is satisfied.

By adopting the exemplary processing as shown in Fig. 10, a degree of freedom in processing in an application can be enhanced.

### [E. Exemplary Processing by Application]

Some processing in which game application 180 uses information provided by communication execution unit 140 will now be described as exemplary processing by the application.

### (e1: Exemplary Processing 1 by Game Application)

An example in which the same game application 180 is simultaneously played in a plurality of game devices 100 will be described by way of example. In this case, game application 180 is an exemplary networked game. The users of game devices 100-1 to 100-4 are assumed to have already joined the common group based on their accounts.

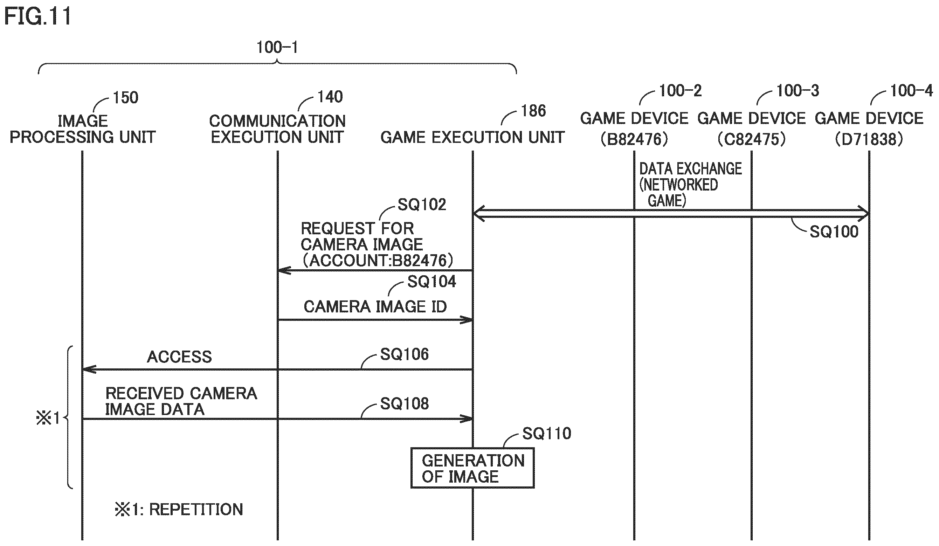

Exemplary processing by game application 180 according to the present embodiment will be described with reference to Fig. 11. In the example shown in Fig. 11, game devices 100-1 to 100-4 exchange data necessary for execution of game application 180 (sequence SQ100).

For example, game execution unit 186 may have a camera image of the user who joins the networked game incorporated in an image of the game being executed. In the present embodiment, game execution unit 186 can identify the account of the user who joins the networked game. Therefore, game execution unit 186 refers to group information 142 to specify one or more accounts belonging also to the common group. Game execution unit 186 then requests communication execution unit 140 for the camera image through the API based on the specified account of another user (sequence SQ102).

Communication execution unit 140 refers to group information 142 and returns a value of a camera image ID corresponding to a selected account of another user to game execution unit 186 (sequence SQ104).

Game execution unit 186 accesses image processing unit 150 (sequence SQ106) and obtains received camera image data 168 associated with the obtained value of the camera image ID (sequence SQ108). Game execution unit 186 performs image generation processing such as superimposition of obtained received camera image data 168 on the image of the game being executed (sequence SQ110). Game image data 182 generated by image synthesis is written in storage area 160 of image processing unit 150. Processing in sequences SQ106 to SQ 110 may be repeated until a predetermined operation to stop display of the camera image is performed.

Instead of processing in sequences SQ106 to SQ 110, by issuance of a request from game execution unit 186 to image processing unit 150, image processing unit 150 may be caused to perform processing for superimposing received camera image data 168 associated with the obtained value of the camera image ID on game image data 182 to generate display image data 162.

Communication execution unit 140 may return an address or the like of storage area 160, instead of the camera image ID.

Game execution unit 186 may thus execute the networked game based on received camera image data 168 or the like obtained via communication execution unit 140.

Though exemplary processing in which game execution unit 186 obtains a single piece of received camera image data 168 is shown for the sake of convenience of description, game execution unit 186 can obtain a plurality of pieces of received camera image data 168 through similar processing.

For example, game execution unit 186 may generate game image data 182 by using one or more pieces of received camera image data 168 corresponding to one or more respective accounts belonging to the common group. In this case, game image data 182 may include received camera image data 168 corresponding to an account not belonging to the game group.

Alternatively, game image data 182 may be generated by using one or more pieces of received camera image data 168 corresponding to one or more respective accounts belonging to the current game group among accounts belonging to the common group. At this time, obtainment of received camera image data 168 corresponding to the account not belonging to the current game group among the accounts belonging to the common group may be restricted, or received camera image data 168 may not be obtained, or may be obtained and then discarded.

Alternatively, game execution unit 186 may obtain corresponding received camera image data 168 upon receiving an explicit operation by the user. For example, in an example where the user of game device 100-1 desires to check a face of at least one user who is simultaneously playing, when the user performs a predetermined operation including selection of another user, game execution unit 186 may request communication execution unit 140 for a camera image in accordance with the selection.

Though Fig. 11 shows exemplary processing in which game execution unit 186 obtains the camera image by way of example, game execution unit 186 may be able to obtain also a game image, sound, text, or other information.

An example in which the same game application 180 is simultaneously running in a plurality of game devices 100 is described above. Game execution unit 186 may be able to obtain the camera image also from another game device 100 that is executing game application 180 in the same series different from game application 180 or another game device that is executing a predetermined game application 180 different from game application 180, without being limited to "the same game application 180."

At this time, in response to the request for the camera image issued by game execution unit 186, communication execution unit 140 may allow game execution unit 186 to obtain the camera image that can be obtained thereby. For example, based on executed-game information 1425 in group information 142, communication execution unit 140 may specify another game device 100 that is executing game application 180 the same as or relating to game application 180 running in game device 100 and may allow game execution unit 186 to obtain the camera image received from specified game device 100. For example, information for identifying game application 180 included in executed-game information 1425 may be an identifier (ID), whether or not the identifier is the same or relating ID may be checked, and another game device 100 that is executing the same or relating game application 180 may be specified based on a result of checking. The "relating ID" may be, for example, one or more IDs set in advance or an ID based on a predetermined rule such as "the same ID except for a last sign." Alternatively, the "relating ID" may be held by game application 180 in game device 100, by the server, or by another game device 100.

Thus, communication execution unit 140 may have game execution unit 186 obtain the camera image based on the information for identifying game application 180 running in game device 100 and executed-game information 1425 of another game device 100.

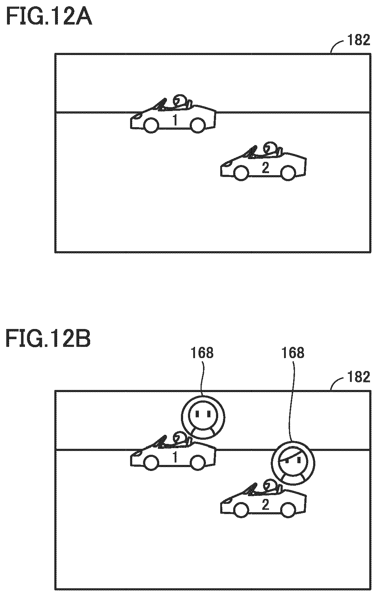

Exemplary game image data outputted by game execution unit 186 according to the present embodiment will be described with reference to Figs. 12A and 12B. Fig. 12A shows exemplary game image data 182 in an example where two users simultaneously play. Fig. 12B shows an example where received camera image data 168 resulting from image capture of each user is superimposed on game image data 182 shown in Fig. 12.

### (e2: Exemplary Processing 2 by Game Application)

Game execution unit 186 may request communication execution unit 140 for group information 142. As described above, game execution unit 186 may request communication execution unit 140 for obtainment of group information 142, in accordance with a command syntax defined in advance as the API. Game execution unit 186 may generate a user interface screen based on obtained group information 142.

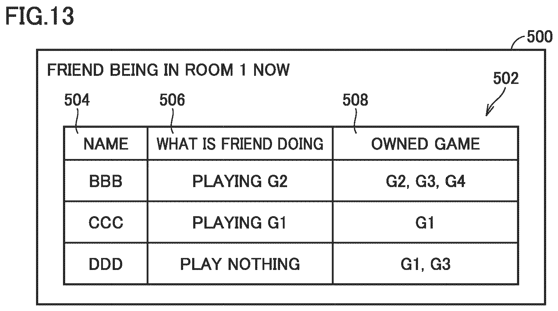

An exemplary screen generated by game execution unit 186 according to the present embodiment will be described with reference to Fig. 13. A user interface screen 500 may include information indicating current states of one or more accounts belonging to the group.

More specifically, user interface screen 500 includes a table 502. Table 502 includes, for example, an account name 504, a state 506, and owned game information 508. Account name 504 is shown based on account name 1423 in group information 142. State 506 is shown based on game execution state 1424 and executed-game information 1425 in group information 142. Owned game information 508 is shown based on held-game information 1426 in group information 142.

An application may thus perform display processing based on owned game information 508 obtained from communication execution unit 140.

### (e3: Exemplary Processing 3 by Game Application)

When game execution unit 186 requests communication execution unit 140 to start monitoring and thereafter receives a predetermined result of determination (for example, "1" indicating change in number of accounts), it may request communication execution unit 140 for obtainment of group information 142.

Game execution unit 186 may thus newly request communication execution unit 140 for obtainment of group information 142 or the like when the predetermined result of determination from communication execution unit 140 satisfies a predetermined condition.

### (e4: Exemplary Processing 4 by Game Application)

Game execution unit 186 may provide various user interface screens based on group information 142 obtained from communication execution unit 140.

For example, while a user of an account belonging to a certain group is playing a game, a user interface screen for playing the game together with another user may be provided. In other words, game execution unit 186 may generate an interface screen for allowing another account belonging to the common group to join the common game group, based on group information 142 or the like.

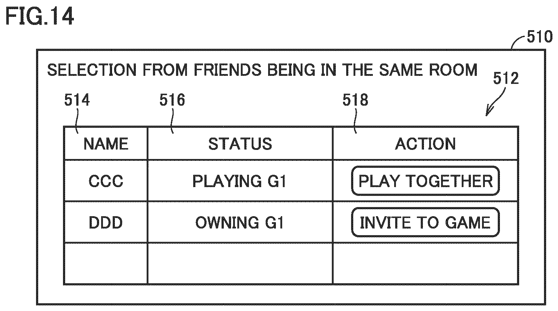

Another exemplary screen generated by the game execution unit according to the present embodiment will be described with reference to Fig. 14. Fig. 14 shows, for example, a user interface screen 510 shown while game application 180 "G1" is running.

User interface screen 510 may be shown while game application 180 is running.

User interface screen 510 includes a table 512. Table 512 includes, for example, an account name 514, a state 516, and an action 518. Among accounts included in table 512, an account that is executing or can execute "G1" may preferentially be shown. For example, an account "CCC" is executing "G1" and an account "DDD" owns "G1".

An object for performing an action in accordance with a corresponding account may be shown as action 518. For example, an object "play together" may be shown in correspondence with the account "CCC". Upon selection of "play together," a message or the like for simultaneous play may be shown at game device 100 where the game is being played. An object "invite to game" may be shown in correspondence with the account "DDD". Upon selection of "invite to game," a message or the like for inviting the account to play "G1" may be shown at corresponding game device 100.

An application may thus provide a user interface screen based on owned game information 508 obtained from communication execution unit 140.

In user interface screen 510 shown in Fig. 14, an account that is executing or can execute the same game application among other accounts belonging to the common group is shown, however, only an account that is executing the same game application may be shown, or other accounts belonging to the common group may also be shown and then an account that is executing the same game application may be shown as being prioritized or emphasized.

A user interface screen for inviting an account to a game may be provided. In this user interface screen, an account that is not executing the same game application but can execute the same game application among other accounts belonging to the common group may be shown. In the present embodiment, upon selection of at least one account, such a message as "do you play with this person?" is shown, and when "YES" is selected, processing for starting a networked game with game device 100 corresponding to the selected account is performed.

In such a scene as "joining a room for playing a match," one or more rooms (game groups) to which at least one account belonging to the common group belongs may be shown in a list.

When a button to start a game session is selected in at least one game application 180, an invitation message or the like may be shown at another game device 100 corresponding to another account belonging to the common group. In this case, the button to start the game session serves substantially also as an invitation button.

### (e5: Exemplary Processing 5 by Game Application)

Game execution unit 186 may execute a networked game based on group information 142 obtained from communication execution unit 140. More specifically, game execution unit 186 may determine, or support determination of, an account used to join a networked game. In other words, game execution unit 186 may perform matching of the networked game based on information obtained from communication execution unit 140.

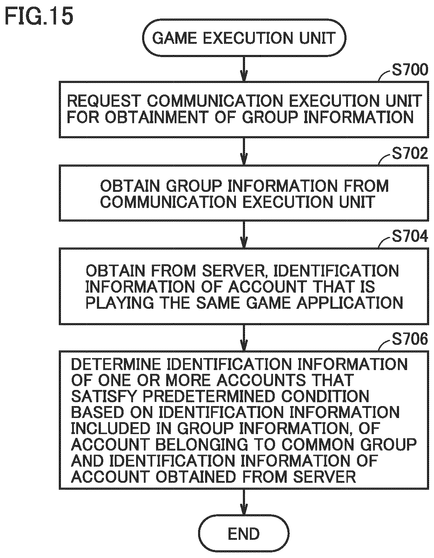

Exemplary processing by game execution unit 186 according to the present embodiment will be described with reference to Fig. 15. Fig. 15 shows exemplary processing for obtaining an account of a user with whom game application 180 is to be played together.

Game execution unit 186 requests communication execution unit 140 for obtainment of group information 142 in accordance with a predetermined user operation (step S700). Game execution unit 186 obtains group information 142 from communication execution unit 140 (step S702) and obtains identification information of an account that is playing the same game application 180 from a server (step S704). The server that obtains identification information of the account that is playing the same game application 180 may be management server 200 or a server other than management server 200.

Game execution unit 186 determines identification information of one or more accounts that satisfy a predetermined condition based on identification information (for example, account 1422, account name 1423, or the like shown in Fig. 6) included in group information 142, of another account belonging to the common group and identification information of the account obtained from the server (step S706).

Game application 180 which is the networked game proceeds between a plurality of accounts including the subject account determined as above.

Processing in step S704 may be skipped. In this case, in step S706, whether or not the predetermined condition is satisfied may be determined based on obtained group information 142. The processing in step S706 may be performed by the server. In this case, the group information is sent to the server in step S702.

An exemplary predetermined condition in step S706 is as below.

For example, an account that is executing the same game application among other accounts belonging to the common group may be determined as an ally. By such matching, the accounts can play the networked game while they communicate with each other.

Alternatively, an account that is executing the same game application among other accounts belonging to the common group may be determined as an enemy. By such matching, fun in playing a match can be secured.

Alternatively, an account that is executing the same game application among other accounts belonging to the common group may be excluded from candidates to be determined as an ally. By such matching, an account that does not belong to the common group is determined as an ally, and hence teaming or the like can be suppressed.

Game execution unit 186 thus executes a networked game with another game device 100 corresponding to an account that satisfies a predetermined condition, at least based on identification information of another account belonging to the common group.

### (e6: Modification)

The processing by the application described above is by way of example, and any method of using information provided by communication execution unit 140 may be applicable. Any exemplary processing described above may freely be combined. Furthermore, any freely combined exemplary processing described above may further be combined with any other processing.

A request from an application such as game application 180 to communication execution unit 140 may be in conformity with any command syntax.

### [F. Restriction of Camera Image]

From points of view of privacy, protection of minors, or the like, communication execution unit 140 may restrict use of camera 118. Restriction of use here is different from temporary mute of the camera image. By way of example, restriction refers to requirement for entry of a password or permission by a parent for using camera 118. In such a case, communication execution unit 140 may disallow incorporation of camera image data 156 in communication data 10, or may allow incorporation of a mute image instead of camera image data 156 in communication data 10. Communication execution unit 140 may restrict use also of camera image data (received camera image data 168) transmitted from another game device 100.

While use of the camera image data transmitted from another game device 100 is restricted in communication execution unit 140, game execution unit 186 may restrict use of received camera image data 168. For example, the game execution unit may avoid using received camera image data 168.

While use of the camera image is restricted in communication execution unit 140, communication execution unit 140 does not have to be able to obtain camera image data (received camera image data 168) from another game device 100. Alternatively, upon reception by communication execution unit 140, of communication data 10 including the camera image data, communication execution unit 140 may discard communication data 10 without processing the same. Alternatively, upon reception by communication execution unit 140, of communication data 10 including the camera image data, communication execution unit 140 may have the camera image data included in communication data 10 stored in storage area 160 in a form unavailable to game device 100. Further alternatively, communication execution unit 140 may have the camera image data included in communication data 10 stored in storage area 160 as received camera image data 168, and then restrict use such that game execution unit 186 is not permitted to use received camera image data 168.

Game execution unit 186 may respond to the request from game execution unit 186 based on information indicating whether or not use of camera 118 in communication execution unit 140 is restricted (which will also be referred to as a "camera use restriction flag" below).

For example, upon receiving the request for the camera image from game execution unit 186, communication execution unit 140 refers to the camera use restriction flag. When the camera use restriction flag is a flag indicating restriction of use of camera 118, communication execution unit 140 does not return a value of the camera image ID. Alternatively, communication execution unit 140 may respond that game execution unit 186 is not permitted to obtain the value of the camera image ID. At this time, communication execution unit 140 may notify game execution unit 186 that game execution unit 186 is not permitted to obtain the value of the camera image data ID because of a status of the camera use restriction flag.

Alternatively, game execution unit 186 may check whether or not use of the camera is restricted in communication execution unit 140 prior to issuance of the request for obtainment of received camera image data 168. For example, game execution unit 186 may obtain the camera use restriction flag from communication execution unit 140. Game execution unit 186 may generate or read, for example, such an image as showing "camera image is unavailable because of restriction of use of camera," without requesting communication execution unit 140 for received camera image data 168, in accordance with the obtained camera use restriction flag, and has that image shown on display 120.

Information returned by communication execution unit 140 to game execution unit 186 may include, for example, whether or not the camera image data from another game device 100 is stored and whether or not use of camera 118 is restricted.

### [G. Audio Data]

In response to a request from game execution unit 186, communication execution unit 140 may return audio data (received audio data 158) transmitted by another game device 100 to game execution unit 186.

Alternatively, communication execution unit 140 may return a position (an address or the like) of received audio data 158 temporarily stored in sound processing unit 152.

With such a method, game execution unit 186 can obtain received audio data 158.

Communication execution unit 140 may return a total sound volume of all accounts belonging to the group, rather than received audio data 158 itself. Communication execution unit 140 can calculate the total sound volume by synthesizing audio data 154 and received audio data 158. Such a total sound volume may be used, for example, for estimation of a degree or the like of excitement in the group.

Communication execution unit 140 may return to game execution unit 186, information indicating which account among accounts belonging to the group is uttering.

Alternatively, by voice recognition of audio data 154 or at least one piece of received audio data 158, communication execution unit 140 may give a notification about utterance of a specific word or return uttered contents.

### [H. Modification]

Though game application 180 is exemplified as an exemplary application that uses information provided by communication execution unit 140 in the description above, any application is applicable without being limited to the game.

Though an example in which, for example, in response to a request to communication execution unit 140 for some kind of information by game execution unit 186, game execution unit 186 which is the issuer of the request is allowed to obtain target information is shown in the description above, a component other than game execution unit 186 may obtain the requested information. In other words, communication execution unit 140 may transmit, or give a notification of, a response to the request to a component other than the transmitter of the request.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. A game device (100) comprising:
execution means (130) configured to simultaneously execute a communication application (114) and a game application (180); and
communication control means (148) configured to control data communication with another game device, wherein
the communication control means is configured to
perform data communication with another game device corresponding to another account belonging to a common group in the communication application in accordance with execution of the communication application by the execution means, and
obtain (S304, S306, S308) first information from the another game device corresponding to the another account belonging to the common group through the data communication, and
the execution means is configured to cause the running game application to obtain (SQ102 to SQ108) second information based on the first information in response to a request issued by the running game application to the running communication application through an application programming interface (API).

2. The game device according to claim 1, wherein
in the common group, camera image data captured by a camera (118) is transmitted and received,
the first information comprises camera image data (168) transmitted from the another game device, and
the second information comprises the transmitted camera image data.

3. The game device according to claim 1 or 2, wherein
the running game application does not use the camera image data in the second information when use of the transmitted camera image data in the communication application is restricted.

4. The game device according to any of claims 1 to 3, wherein
the second information comprises information on a game application in the another game device.

5. The game device according to claim 4, wherein
the information on the game application comprises information for identifying a game application running in the another game device.

6. The game device according to any of claims 1 to 5, wherein
in the common group, audio data obtained by a microphone (122) is transmitted and received, and
the first information comprises audio data (158) transmitted from another game device.

7. The game device according to any of claims 1 to 6, wherein
the request comprises causing the running communication application to be in a state that permits the running game application to obtain the second information when a predetermined condition is satisfied.

8. The game device according to any of claims 1 to 7, wherein
the execution means is configured to permit the running game application to obtain third information based on the first information in response to another request different from the request through the API when the second information satisfies a predetermined condition.

9. The game device according to any of claims 1 to 8, wherein
the running game application is configured to execute a networked game based on the second information.

10. The game device according to claim 9, wherein
the second information comprises identification information of another account belonging to the common group, and
the running game application is configured to execute the networked game based on the identification information, with another game device corresponding to an account that satisfies a predetermined condition.

11. The game device according to any of claims 1 to 10, wherein
the second information comprises identification information of another account belonging to the common group, and
the running game application is configured to generate an interface screen for allowing another account belonging to the common group to join a common game group, based on the second information.

12. The game device according to claim 9, wherein
the second information comprises camera image data (168) transmitted from another game device.

13. The game device according to claim 12, wherein
the running game application is configured to obtain the transmitted camera image data corresponding to another account that belongs to the common group and belongs also to a game group, and
the running communication application is configured to transmit a game image to another game device corresponding to another account belonging to the common group, the game image being generated by the running game application using the transmitted camera image data.

14. The game device according to any of claims 1 to 13, wherein
the running communication application is configured to transmit image data outputted by the running game application to another game device corresponding to another account belonging to the common group.

15. A method to be performed in a game device (100), the method comprising:
simultaneously executing (130) a communication application (114) and a game application (180);
performing data communication (148; 106) with another game device corresponding to another account belonging to a common group in the communication application in accordance with execution of the communication application;
obtaining (S304, S306, S308) first information from the another game device corresponding to the another account belonging to the common group through the data communication; and
causing the running game application to obtain (SQ102 to SQ108) second information based on the first information in response to a request issued by the running game application to the running communication application through an API.

16. A program (112) causing one or more processors (102) to perform:
simultaneously executing (130) a communication application (114) and a game application (180);
performing data communication (148) with another game device corresponding to another account belonging to a common group in the communication application in accordance with execution of the communication application;
obtaining (S304, S306, S308) first information from the another game device corresponding to the another account belonging to the common group through the data communication; and
causing the running game application to obtain (SQ102 to SQ108) second information based on the first information in response to a request issued by the running game application to the running communication application through an API.
